(19) Europäisches Patentamt

European Patent Office

Office européen des brevets

(11) **EP 2 698 902 B1**

(12) **EUROPEAN PATENT SPECIFICATION**

(45) Date of publication and mention
of the grant of the patent:
**07.06.2023 Bulletin 2023/23**

(21) Application number: **13180844.6**

(22) Date of filing: **19.08.2013**

(51) International Patent Classification (IPC):
**H02K 3/52** *(2006.01)*     **H02K 7/14** *(2006.01)*
**H02K 1/14** *(2006.01)*

(52) Cooperative Patent Classification (CPC):
**H02K 3/522;** H02K 1/148; H02K 7/145

(54) **Motor having a two-piece end ring**

Motor mit zweiteiligem Endring

Moteur pourvu d'une bague d'extrémité en deux parties

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.08.2012  US 201261684194 P**

(43) Date of publication of application:
**19.02.2014  Bulletin 2014/08**

(73) Proprietor: **Black & Decker Inc.
Newark, Delaware 19711 (US)**

(72) Inventors:
• **Oktavec, Craig A
  Forest Hill, MD Maryland 21050 (US)**
• **Kusmierski, Robert G
  York, PA Pennsylvania 17403 (US)**
• **Smith, David J.
  Columbia, MD Maryland 21045 (US)**
• **Nace, Daniel F.
  Towson, MD Maryland 21204 (US)**

(74) Representative: **SBD IPAdmin
270 Bath Road
Slough, Berkshire SL1 4DX (GB)**

(56) References cited:
**FR-A1- 2 534 083     GB-A- 2 430 085
US-A- 4 322 647     US-A- 4 765 054
US-A- 6 034 461**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a power tool.

Dynamoelectric machines are machines that generate electric power or use electric power. Common types of dynamoelectric machines are alternators, generators, and electric motors.

Electric motors are used in a wide variety of applications involving power tools such as drills, saws, sanding and grinding devices, and yard tools such as edgers and trimmers, just to name a few such tools. These devices all make use of electric motors having an armature and a field, such as a stator.

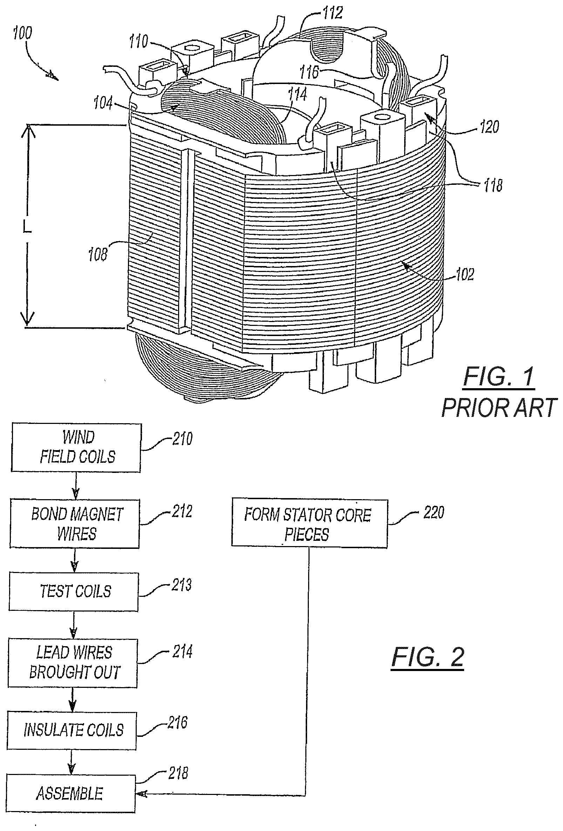

Figure 1 shows a typical prior art stator 100 for an electric motor. Stator 100 is formed from a lamination stack 102 around which a plurality of windings of magnet wires 104 are wound to form field coils 114. Lamination stack 102 is formed by stacking together an appropriate number of individual laminations 108 and welding them together. The individual laminations 108 are typically made by stamping them from steel. To do so, loose laminations 108 are loaded in a stacker. The stacker picks up the appropriate number of laminations 108 and places them in a fixture where they are welded together. The laminations 108 are formed with slots so the resulting lamination stack 102 has slots 110 therein in which the magnet wires 104 are wound. Magnet wires, as that term is commonly understood, are wires of the type conventionally used to wind coils in electric machines, such as armatures and stators. Prior to winding the magnet wires 104, insulating sleeves or insulating slot liners (not shown), such as vulcanized fibre, are placed in the slots 110 and end rings 112 placed on the lamination stack 102. End rings 112 are illustratively made of plastic and formed to include coil forms 116. Field coils 114 are then wound by winding the magnet wires 104 in the slots 110. After the field coils 114 are wound, the end of the magnet wires 104 are appropriately terminated, such as to terminals 118 in a terminal post 120. The magnet wires 104 are then bonded together, such as by the application of heat when bondable magnet wires are used. Bondable magnet wires are magnet wires layered with a heat activated thermoplastic or thermoset polymer adhesive. One type of bondable magnet wires commonly used is wire available under the trade name BONDEZE from Phelps Dodge of Fort Wayne, Indiana. Alternatively, the magnet wires 104 may be bonded by a trickle resin process described below. Where the stator 100 will be used in an application that exposes it to a particularly abrasive environment, such as a grinder, an epoxy coating is applied to the field coils 114 for abrasion protection.

As is known, motor output power is a product of motor speed and torque, so one approach to boosting output power is to change the windings of the coils so that the motor runs faster. However, this is often impractical as higher motor speeds puts greater stresses on gears, raises overall vibration levels, and may result in the speed of the tool exceeding rated speeds for associated accessories, such as drill bits, etc.

If any of these limitations exist and the motor speed cannot be increased, an alternative approach is to increase the stack length. There is a general relationship that provides that the motor output power is directly proportional to the product of the length of the stack of the motor's stator and the square of the armature diameter. For example, for a given motor speed the motor output power can be doubled by doubling the stack length or increasing the armature diameter by a factor of $\sqrt{2}$.

Increasing the stack length is not practical in many power tool applications because it may negatively impact the tool's ergonomics or increase the overall length of the tool to the point where it is cumbersome to use. For example, a reciprocating saw with an extended or longer body is more difficult to manoeuvre in tight spaces, such as cutting pipes in walls of buildings, etc.

While increasing armature diameter is an option to increase motor output power, this results in almost a linear increase in the diameter of the field or stator, which may again adversely affect the ergonomics of the tool.

US 6,034,461 discloses a stator of an electric motor having end ring halves. GB2430085 discloses an electric motor with a multi-piece stator.

Accordingly, there is provided a power tool in accordance with claim 1.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:

Fig. 1 is a perspective view of a prior art stator;
Fig. 2 is a flow chart of a method for forming a stator;
Fig. 3 is an exploded assembly view of a stator formed in accordance with the method of Fig. 2;
Fig. 3A is a perspective view of a slot liner;
Fig. 3B is a top view of an electric motor made using the stator of Fig. 3;
Figs. 4A - 4C are perspective views of a stator being assembled;

Figs. 5A - 5E are side section views of stator return path and pole pieces with mating features;

Fig. 5F is a side section view of a pole piece and field coil with portions of the pole piece staked over the field coil;

Figs. 6A - 6C are perspective views of a mould used to encapsulate a field coil prior to moulding and a field coil after moulding;

Figs. 7A and 7B are side section views of a variation of the stator of Fig. 4;

Fig. 8 is a cross-section of a power tool having a stator;

Fig. 9 is a perspective view of a stator assembly having a two-piece end ring, according to the invention covered by the claims.

Fig. 10 is another view of the stator assembly of Fig. 9.

Fig. 11 is a perspective view of a conductive terminal used in the stator assembly of Fig. 9.

Fig. 12 is a perspective view of a brush card mounted on the stator assembly.

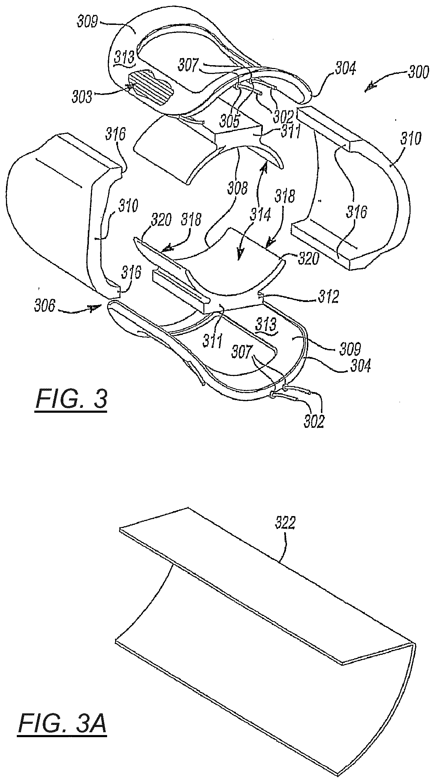

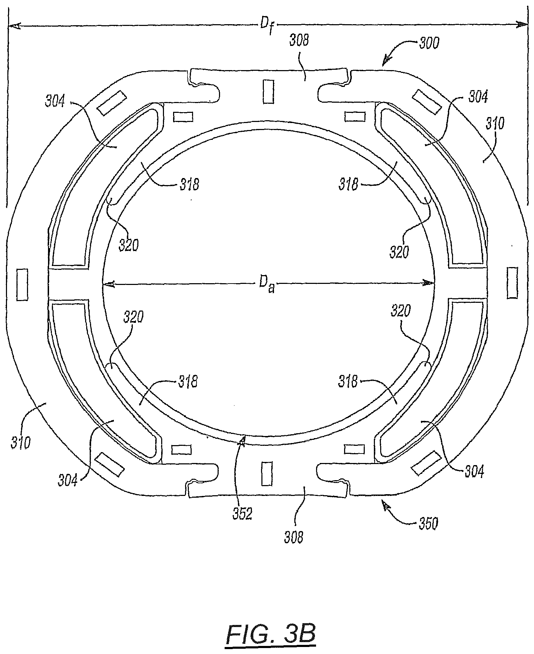

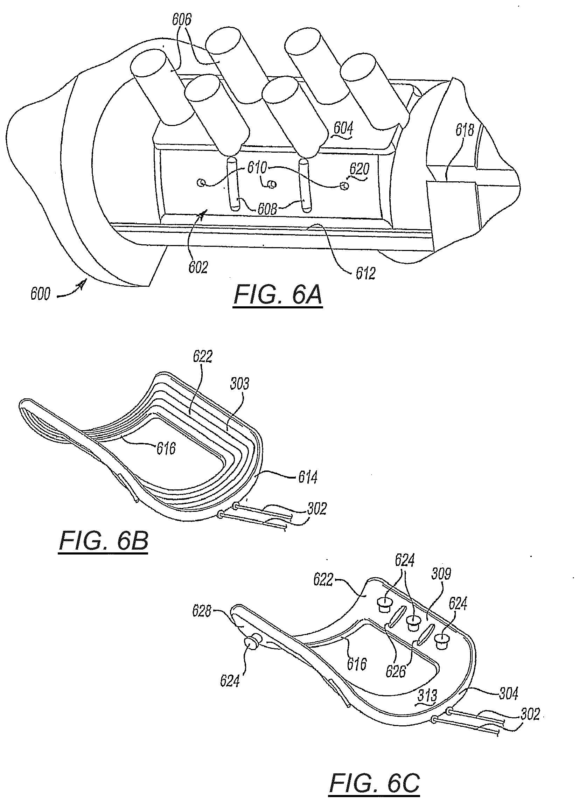

Referring to Figures 2 and 3, a process for making a field assembly, stator 300 in this instance which is outside the scope of the claimed invention. At step 210, a coil, such as coil 614 (Fig. 6), for field coils 304 of stator 300 is wound to a predetermined shape, preferably net shape, by winding magnet wires 303 to the predetermined shape. "Net shape" means the final shape of the field coils 304 in an assembled stator 300. At step 212, the magnet wires 303 are bonded together. The magnet wires 303 are preferably bondable magnet wires, such as BONDEZE wires, having a layer of heat activated thermoplastic or thermoset adhesive thereon and heat is applied to the formed coil 614 to activate the adhesive on the magnet wires 303 to bond them together. It should be understood that the magnet wires can be bonded when the coil is still in the winding tooling or after it has been removed from the tooling. An advantage of bonding the wires when the coil is still in the winding tooling is that it assures that the coil maintains its shape when it is removed from the tooling. The coils may also be compressed during bonding. The bonded coil 614 is then tested at 213.

Field coils 304 have coil ends 305 with lead wires 302 extending therefrom which are brought out at step 214 from the formed coil 614. Lead wires 302 can be brought out using different alternatives. Coil ends 305 may illustratively be terminated at terminals 307 and lead wires 302 attached to the terminals 307. Lead wires 302 can be attached directly to coil ends 305. Lengths of coil ends 305 can be insulated by various methods, such as shrink tubing, various wall thickness TFE or PTFE tubing, and the insulated lengths provide the lead wires 302. The use of tubing, such as TFE or PTFE tubing, in addition to insulating the coil ends 305, further provides the advantages of strain relief and added rigidity to lead wires 302. Sliding tubing such as TFE or PTFE tubing over the coil ends 305 shields them and the tubing can be retained by any type of end termination.

At step 216, the formed coil 614 is insulated to form field coil 304. The formed coil 614 can be insulated by encapsulating it with an encapsulation material 309 that forms an encapsulation 313. The encapsulation material 309 is illustratively an elastomeric thermoplastic or thermoset plastic, such as thermoset liquid silicone rubber. Encapsulation material 309 is illustratively injection moulded around field coils 304. It should be understood that other processes and materials can be used to encapsulate the formed and bonded coils with encapsulation material 309, such as transfer moulding or spraying the encapsulation material 309. The encapsulation material could also be a more rigid thermoset. The encapsulation material may illustratively be thermally conductive and could also be a more rigid type of thermally conductive plastic, such as a Konduit® thermoplastic commercially available from LNP Engineering Plastics of Exton, PA. The encapsulation material may illustratively be applied using the known vacuum impregnation process. The formed field coil 614 would be placed in a vacuum chamber and the encapsulation material wicks onto the field coil 614.

Encapsulating the field coils 304 with the appropriate encapsulating material enhances abrasion protection and improves tracking resistance. Some types of power tools, such as grinders that are used to grind metal and remove mortar between bricks (called tuck pointing), generate a lot of abrasive particles that are drawn into the motor during operation and thus pass over the stator and rotor coil windings. These particles abrade the insulation of the wire, and also tends to abrade the extra trickle varnishes or slurries that may be used to coat the coil windings. Eventually, the wires electrically short and the motor burns up, resulting in an inoperable power tool. Tracking is a condition where an alternate conductive path is created outside the motor, thus carrying electrical current where it normally doesn't go, such as outside of the motor windings. This path is normally created by metal debris drawing into the motor during operation of the power tool that collects in the tool housing and contacts exposed elements of the electrical system of the power tool, such as brush boxes, exposed motor field windings, and lead wires.

Silicon rubber, such as liquid silicone rubber, is one such encapsulating material that can be used to enhance abrasion protection and improve tracking resistance. Silicon rubber is an elastomeric material and cushions the particles drawn into the motor when the particles impact it. Using a grade of silicon rubber with an appropriate durometre gives a desirable balance of functionality in terms of mechanical strength, abrasion resistance, tear resistance, and manufacturability. Illustratively, the liquid silicone rubber has a durometre in the range of 40 to 70 Shore A, and illustratively greater than about 50, and a high tear strength, that is, a tear strength of 200 pounds per inch or greater. It should be understood that other elastomers having comparable properties can also be used as the encapsulating material. The silicon rubber, or similar elastomers, can be applied by various means in addition to injection moulding, such as spray-on, brush-on and compression moulding and can be cured by any appropriate method, such as heat cure, room temperature cure, moisture cure and UV light cure.

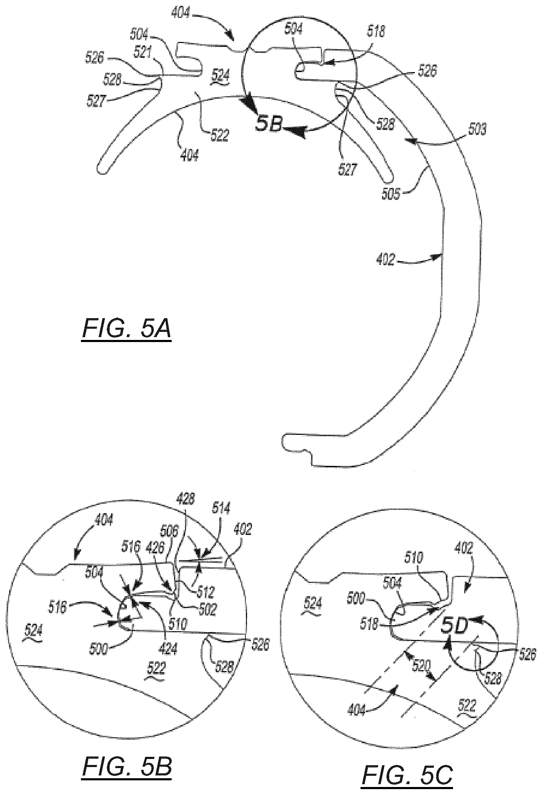

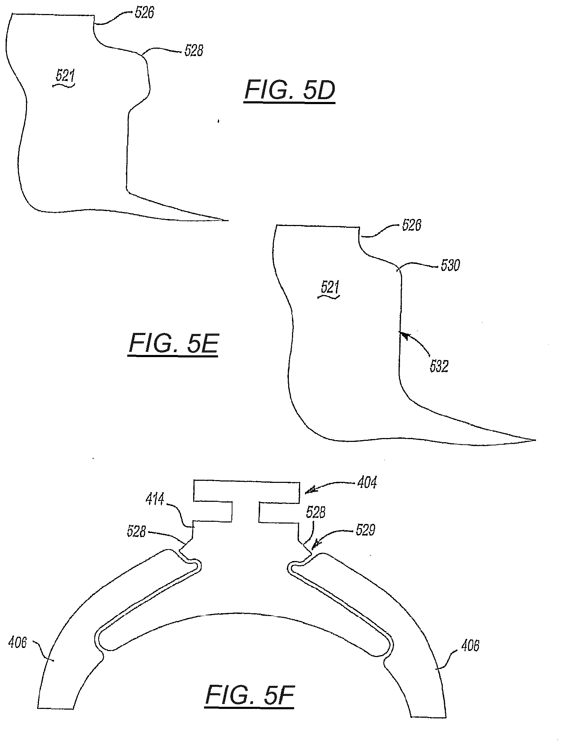

Alternatively or in addition to encapsulating the field coils, insulating slot liners, such as slot liner 322 (Fig. 3A), can be placed in the slots of the stator core between pole pieces 308 and inner surfaces of return path pieces 310. Such a slot 503 is shown more specifically in the embodiment of Fig. 5A between pole pieces 404 and an inner surface 505 of return path pieces 402. The insulating slot liners may illustratively be known types of insulating slot liners, such as those made of fibre or rag-polyester.

Insulated field coils 304 are assembled with stator core pieces 306 to form stator 300. Stator core pieces 306 include pole pieces 308 and back iron or return path pieces 310.

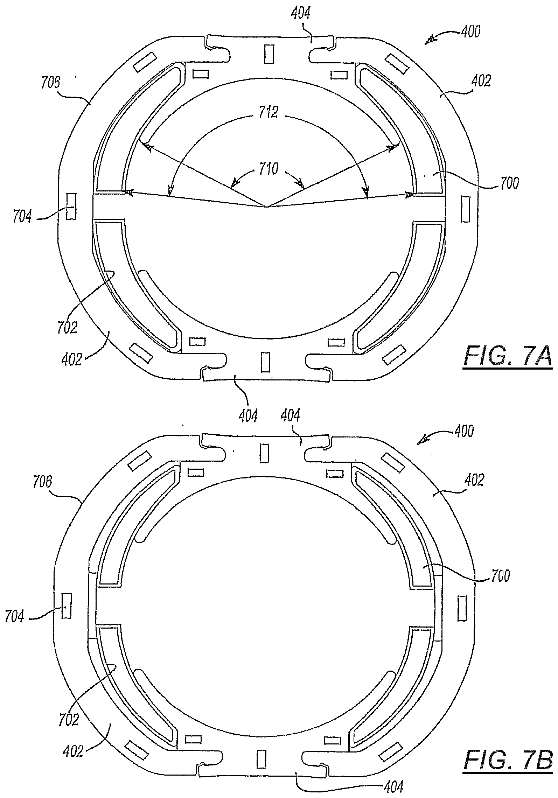

Stator core pieces 306 are formed at step 220 out of steel laminations, as discussed above. In this regard, the laminations can be stacked and bonded together, such as by welding, or the laminations 706 (Figs. 7A and 7B) stamped with interlocks, such as interlocks 704 (Figs. 7A and 7B), which interlock the laminations together as the laminations are stamped. Each core piece 306 may illustratively be seam welded separately across its laminations to strengthen it during handling, assembly of stator 300 and during operation of the motor in which stator 300 is used. Stator core pieces 306 can also be made by moulding or pressing them out of an iron powder, illustratively, insulated iron powder, such as a sulphate coated iron powder. One such sulphate coated iron powder is SOMALOY™ 500 available from Höganäs AB of Sweden through its U.S. subsidiary, North American Höganäs, Inc., 111 Hoganas Way, Hollsopple, PA 15935-6416. It should be understood that stator core pieces 306 could also be formed from other iron powders that can be pressed or moulded, such as sintered iron powder.

It should be understood that forming the stator core pieces 306 is illustratively carried out independently of forming field coils 304 and vice versa. Consequently, stator core pieces 306 and field coils 304 can be made on separate lines and stockpiled until needed. It also allows the geometry of field coils 304 and stator core pieces 306 to be optimized. Moreover, pole pieces 308 are illustratively made separately from return path pieces 310. This allows the geometry of the pole pieces 308 and the return path pieces 310 to be separately optimized. Preferably, the pole pieces 308 are identical as are the return path pieces 310 and the field coils 304.

Each pole piece 308 illustratively has a neck 311 with a rectangular outer base 312 with an inwardly opening arcuate cylindrical pole tip section 314 thereon having pole tips 318. Each return path piece 310 is illustratively semicylindrical with opposed ends 316 shaped to attach to one or both of the opposed ends 316 of the other return path piece 310 and the rectangular outer bases 312 of pole pieces 308. In assembling encapsulated field coils 304 and stator core pieces 306, encapsulated field coils 304 are placed over the necks 311 of respective pole pieces 308. Return path pieces 310 are then secured to pole pieces 308, such as by snapping together, welding, riveting, with screws, forming operations, or the like.

An armature, such as armature 352 (Fig. 3B) is then placed in stator 300 in making an electric motor, such as electric motor 350 (Fig. 3B).

The process just described provides a number of advantages. A relatively simple, inexpensive machine can be used to wind the field coils 304. Moreover, multiple magnet wires can be wound at the same time to form the field coils 304. It also provides for a higher slot fill factor (total area of wire in the winding slot, including wire insulation, divided by available or total area of the winding slot), particularly when the wires of the coils are compressed during bonding. Looked at a different way, it provides for denser field coil that has a higher packing factor (total area of the wire, including wire insulation, divided by the area of the envelope of the field coil defined by the inner and outer perimeters of the field coil).

Compressing the wires during bonding improves bonding by assuring that adjacent wires of the coil are firmly together resulting in increased bond strength. Also, by pressing the wires of the coil together, many of the voids from the winding process are eliminated. This reduces or eliminates air pockets in the coil resulting in improved heat transfer because the inner wires of the coil are in direct contact with the outer wires, which are exposed to airflow when the motor is in operation. The resistive heat generated during operation of the motor can thus be dissipated through the coil quicker by being conducted through adjacent wires rather than convection through an air pocket. Finally, by compressing the wires of the coil together, a higher slot fill factor and packing factor can be achieved compared to conventional winding techniques. This allows for more turns of wire or equal turns of larger gauge (thicker) wire than provided by conventional winding techniques. Field coils having packing factors of greater than sixty, seventy, eighty and up to about eighty five percent can be achieved with this process.

A multi-stranded wire is used to wind the field coils 304 which also provides for more slot fill. A commercially available wire of this type is commonly known as litz wire.

Multiple magnet wires having different functions and, illustratively, different sizes, can be wound to form the field coils 304. For example, eighteen gauge magnet wire can be wound in each field coil 304 to form one or more coils that are energized to provide the magnetic field that interacts with the armature of the electric motor to rotate the armature. Twenty-one gauge wire can be wound in each of field coils 304 to form coils that are energized to brake the armature. In this regard, the magnet wires of different sizes are wound sequentially, that is, first one size of magnet wire is wound and then the second size of magnet wire is wound, or they are wound at the same time. The twenty-one gauge wire is illustratively wound with more turns than the eighteen gauge wire to produce the needed amount of flux to brake the armature quickly.

Forming the field coils 304 into predetermined shape(s), such as by winding them to pre-determined shape(s), and then bonding the magnet wires 303 allows the field coils 304 to be wound so that they extend beyond edges 320 of pole tips 318 of pole pieces 308 when field coils 304 are assembled in stator 300. That is, the field coils 304 can extend beyond the edges 320 of pole tips 318 of pole pieces 308. In this regard, the return path pieces 310 may be formed so that they are axially longer than the pole pieces 308. This also allows the magnet wire to be wound so that the field coils 304 extend around or beyond ends of the pole pieces 308 and not extend beyond the edges of the return path pieces 310 once they are assembled in stator 300. Also, the coil forming step allows the field coils 304 to be formed more compactly, as discussed, and thinner. By being able to form the field coils 304 so that they extend beyond edges 320 of pole tips 318 of pole pieces 308 and be more compact, applicants have determined that at least ten percent more output power can be achieved as well as providing better thermal characteristics for a given size field. For example, applicants found that an electric motor having a 59 mm diameter stator made in accordance with the invention has about thirty-six more percent output power than an electric motor having a 59 mm diameter conventionally made stator. This also permits a smaller diameter stator to be used for a given amount of output power. For example, applicants found that an electric motor having a 55 mm diameter stator formed according to the invention has about the same output power as an electric motor having a 59 mm diameter conventionally formed stator.

Forming the field coils 304, illustratively into net shapes, and then assembling the field coils to the pole pieces also allows the overall diameter of stator 300 for a given diameter motor to be kept the same but allows a larger diameter armature to be used. As is known, the maximum motor performance measured by cold or hot max watts out increases as the size of the armature increases. More specifically, as the diameter of a motor armature increases, the power of a motor goes up by the square of the armature diameter. But with conventional motors, every incremental increase in the diameter of the armature results in a corresponding increase in the diameter of the stator and thus of the motor. A motor using a stator made in accordance with the invention discussed above and as further discussed below allows the windings of the field coils, such as field coils 304, to be packed more tightly. It also allows them to be packed more thinly which in turn allows the thickness of the stator core pieces to be reduced. Packing the windings of the field coils 304 thinner allows, as discussed above, the diameter of the motor to be reduced or a larger diameter armature used for a given diameter motor. The above motor having a 55 mm diameter stator constructed in accordance with this invention (which is also the diameter of the motor) for use in a small angle grinder provides a power output of about 1000W. To achieve a power output of 1000W using a conventional stator requires a 59 mm stator.

Using the above referenced motor with the conventional 59 mm diameter stator as an example, which has field coils wound about the pole tips of the poles by a needle-winder as is conventional, this motor has a total slot area for the field coils (slot area being the area in which the field coils can be disposed which in the case of the conventional needle wound field is limited by the width or arc of the pole tips of the poles) of about 90 mm$^2$ and radial dimensions as follows:

| | |
|---|---|
| Armature radius: | 17.5 mm |
| Airgap | 0.5 mm |
| Field coil thickness: | 6.5 mm (includes thickness of pole tip) |
| Back iron thickness: | 5 mm |

(The air gap is the gap between the field coils or faces of the pole tips, whichever is closer to the armature, and the armature.)

The above referenced motor with the 55 mm diameter stator made in accordance with this invention where the field coils 304 can extend beyond the edges 320 of the pole tips 318 has a total slot area for the field coils of about 100 mm$^2$ with the following radial dimensions:

| | |
|---|---|
| Armature radius | 17.5 mm |
| Airgap | 0.5 mm |
| Coil thickness | 4.5 mm (includes thickness of pole tip) |
| Back iron thickness | 4 mm |

The armature winding in both cases is eight turns of 0.52 mm wire and winding of each field coil in both cases is sixty-two turns of 0.75mm wire.

Alternatively, a 59 mm diameter stator constructed according to this invention could be used allowing for the diameter of the armature to be increased 4 mm, with a commensurate increase in power.

Table 1 below shows the armature OD, Field OD, Armature OD/Field OD ratio, and power output at 38,000 RPM for conventional AC motors having a Field OD of 57 mm and 59 mm and Table 2 below shows the same information for AC motors with fields made in accordance with the foregoing aspect of the invention having a field O.D. of 55 mm and 59 mm.

| Table 1 | | | | |
|---|---|---|---|---|
| Field O.D. | Armature O.D. | Ratio | RPM | Watts |
| 56.96 mm | 35.19 mm | 0.618 | 38000 | 800 |
| 59.00 | 35.19 mm | 0.596 | 38000 | 1000 |

| Table 2 | | | | |
|---|---|---|---|---|
| Field O.D. $(D_f)$ | Armature O.D. $(D_a)$ | Ratio | RPM | Watts |
| 55.00 mm | 35.19 mm | 0.640 | 38000 | 1050 |
| 59.00 | 37.00 mm | 0.627 | 38000 | 1600 |

Referring to the AC motor having a 59 mm field O.D. as an example, as can be seen from Tables 1 and 2, the motor made in accordance with the foregoing aspect of the invention allows use of a 37 mm O.D. armature with a commensurate increase in power to 1600 Watts at 38,000 RPM compared to a conventional AC motor which utilizes a 35.19 mm O.D. armature and has a power output of 1000 Watts at 38,000 RPM. Also as can be seen from Tables 1 and 2, a motor having a 55 mm O.D. field made in accordance with this aspect of the invention allows use of a 35.19 mm O.D. armature resulting in a power output of 1050 Watts at 38,000 RPM, which is more than 1.25 times the power of an existing AC motor having a 56.96 mm O.D. field which also uses a 35.19 mm O.D. armature. In accordance with the foregoing aspect of the invention, for a given motor volume (motor outside diameter x motor length) an AC electric motor 350 (Fig. 3B) made in accordance with the foregoing aspect of the invention has an armature 352 and a field or stator 300 with an armature O.D. $(D_a)$ to field O.D. $(D_f)$ ratio of at least 0.625 which results in motor 350 having at least 1.3 times the power of an existing AC electric motor with a field having the same O.D. but with the smaller O.D. armature. The motor is also thermally balanced with the operating temperature of the field being about the same as the operating temperature of the armature at the current or power rating of the motor, such as the Underwriter Laboratories' rating for the motor.

Forming the stator core pieces 306 separately from each other and particularly from the field coils 304 decouples an important aspect of the design and configuration of the field coils from the design and configuration of the stator core pieces 306, the pole pieces 308 in particular. In conventional stators with needlewound field coils, the field coils can't extend beyond the edges of the pole tips since the pole tips are used to hold the wires of the field coils during winding and before bonding or application of the trickle resin. The usable field winding area is thus defined by the width or arc (included angle) of the pole tips. While the arc of the pole tips can be increased to increase the area in which the field coils can be wound, this causes performance problems, particularly, commutation performance. Extending the arc of the pole tips too much degrades commutation. Thus, commutation performance limits the degree to which the area in which the coils are wound can be increased by increasing the arc of the pole tips. In this regard, it has been shown that narrower, reduced span pole faces can be beneficial for commutation in terms of reduced arcing, better brush/commutator life and less electrical noise. However, in conventional needle wound fields, this reduces the available field winding area and therefore limits the output power that can be achieved.

In universal motor commutation, the carbon brushes and commutator provide a means to provide power to the rotating armature and a means to smoothly reverse the current flow in appropriate armature coils as it rotates. This reversal occurs as the commutator bars attached to these coils pass beneath the carbon brushes and are effectively shorted for a brief period of time. From a design standpoint, managing the power dissipated during this commutation is critical to reducing arcing, delivering adequate brush life and minimizing electrical noise. The latter is an important design consideration for some markets, where local compliance agencies have set limits on the level of noise that is acceptable and mandate additional measures/components to suppress it to an acceptable level.

Forward biasing the motor is a common technique to improve commutation. This is done by shifting the connection of the winding to the commutator or moving the physical location of the brushes. This has the effect of moving the shorted coil (when a brush bridges two commutator bars) into the weak trailing edge of the field flux. The back EMF produced in the shorted coil counteracts some of the commutation voltage and reduces arcing. The disadvantage is that the motor has a definite directional bias and thus has poorer commutation in one direction than the other.

Two approaches are often used to manage the effects of forward biasing the motor. The first is to provide a reversing brush ring, a device that physically moves the location of the brushes depending on the selected motor run direction. This ensures that the brush location and associated motor bias are appropriate for the direction the motor is running. It has the disadvantage of the associated cost, size and reliability concerns associated with this additional mechanism.

The second approach that is commonly used in reversing applications, particularly where variable speed switches are employed, is a physical limit on the switch travel when it is in reverse mode. This limits the power and speed of the motor in the reverse direction so that even though the motors forward bias produces poor commutation in reverse, the power and associated electrical noise is limited. One disadvantage of this method is that depending on the severity of the arcing in the reverse direction, the switch travel may be limited to a point where it becomes a nuisance to the user. Consider for example driving a screw in the forward direction and finding that the power is so limited in reverse that the tool cannot back the screw out.

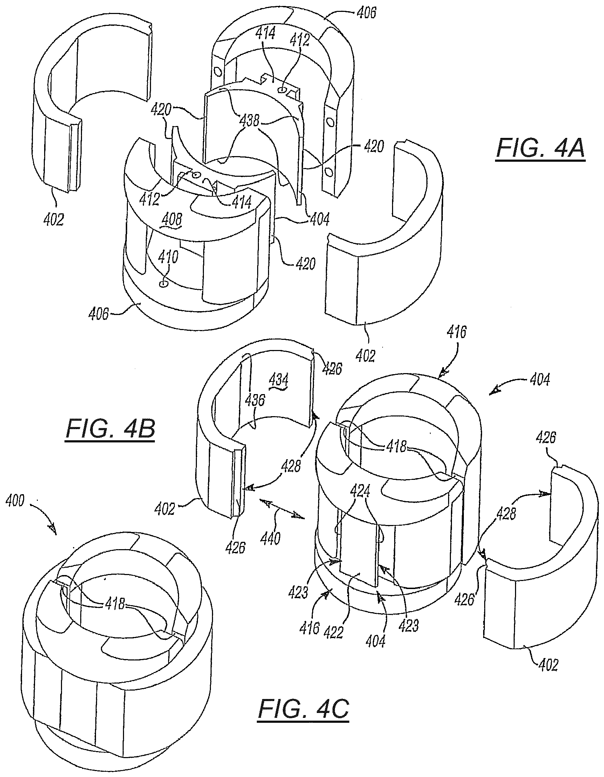

Figs. 4A - 4C show a variation of the above described. A field assembly, stator 400 in this instance, has first and second return path pieces 402, first and second pole pieces 404, and first and second field coils 406. Field coils 406 are illustratively pre-formed coils encapsulated with an elastomeric encapsulation 408. Field coils 406 are illustratively wound to the predetermined shape as described above with reference to the embodiment shown in Fig. 3. Illustratively, elastomeric encapsulation 408 is liquid silicone rubber, as described above. It should be understood that field coils 406 can be insulated in other manners as described above.

To assemble stator 400, field coils 406 are placed over necks 414 of pole pieces 404. Necks 414 have opposed receiving pockets 504 (Figs. 5A - 5C) therein between pole tip section 522 of pole pieces 404 and base portion 524 of necks 414 of pole pieces 404. Circumferentially and radially outer edges 526 of pole tip section 522 project circumferentially outwardly to provide lips 528 (in other words, pole tip portions 522 have undercuts 527). Edges 526 may illustratively be recessed and have a radius as shown in Fig. 5D to ease the assembly of field coils 406 to pole pieces 404. If edges 526 are sharp edges, the insulation on field coils 406 could catch and possibly be displaced from its correct position on the coil. With edges 526 having a smooth radius, the insulation on field coils 406 more freely slides onto pole pieces 404 and facilitates keeping the insulation correctly positioned on field coils 406.

Field coils 406, when encapsulated with an elastomeric encapsulation material such as liquid silicone rubber, snap over lips 528 and into undercuts 527 which retains them in place during further assembly of stator 400. Bumps or other interference features may illustratively be formed of the encapsulation material where the field coils abut the pole tip portions 522 to further retain the field coils 406 to the pole pieces. In a variation, lips 528 may also be staked over field coils 406 in one or more places, shown illustratively at 529, to provide further retention of field coils 406 as shown in Fig. 5F.

Ends 418 of field coils 406 may extend beyond pole tips 420 of pole pieces 404. Return path pieces 402 are then brought in radially (laterally) and mated to the pole pieces 404. Opposed edges 423 of radial outer ends 422 of pole pieces 404 have mating features 424 that mate with corresponding mating features 426 in edges 428 of return path pieces 402, as described in more detail below.

The field coils 406 may have mating features 410 formed in encapsulation 408. Pole pieces 404 have corresponding mating features 412 formed therein, and in this regard, pole pieces 404 may be encapsulated with an encapsulation material with the mating features 412 formed in this encapsulation, or the mating features 412 formed directly in the soft magnetic material of which pole pieces 404 are made. Mating features 410 may illustratively be a projection or detent and mating feature 412 would then be a corresponding hole or recess. The converse could also be used - that is, mating feature 412 is the projection or detent and mating feature 410 is the corresponding hole or recess. Mating features 410 of field coils 406 and mating features 412 of pole pieces 404 mate together when field coils 406 are placed over the necks 414 of pole pieces 404, holding each field coil 406 to a respective pole piece 404, making coil/pole subassemblies 416. Pole pieces 404 may illustratively be made of laminations or of iron powder, such as insulated iron powder, such as described above with reference to Figs. 2 and 3. Similarly, return path pieces 402 can be made of laminations or insulated iron powder.

Turning to Figs. 5 A and 5B, an example of mating features 424, 426 is shown. Mating feature 426 of each edge 428 of each return path piece 402 is a projection 500 that extends from the respective edge 428 of the return path piece 402, with a recess 502 at a junction of projection 500 and edge 428 of return path piece 402. Mating feature 424 in each opposed edge 423 of each radial outer end 422 of each pole piece 404 (Fig. 4B) comprises receiving pocket 504 defined between outer finger 506 of base portion 524 of pole piece 404 and pole tip portion 522 of pole piece 404. Mating feature 424 further includes outer finger 506 having a projection 510 extending radially inwardly from an outer end 512 of finger 506.

Each receiving pocket 504 is illustratively larger than the projection 500 of the respective return path piece 402 so that projection 500 is easily received in the receiving pocket 504. This is accomplished by forming finger 506 so that it is at an angle 514 with respect to projection 500, as shown in Fig. 5B, when projection 500 is first inserted into receiving pocket 504. Additionally, mating radii of receiving projection 500 and receiving pocket 504 are sized so that there is always an appropriate clearance 516 between them taking tolerances into account.

Once the projections 500 of return path pieces 402 are inserted into receiving pockets 504 of respective pole pieces 404, the fingers 506 of pole pieces 404 are deformed radially inwardly so that projections 510 extending radially inwardly from outer ends 512 of fingers 506 are received in recesses 502 of respective return path pieces 402. The mating of projections 510 in recesses 502 forms mating detents 518 (Fig. 5A) that mechanically lock pole pieces 404 and return path pieces 402 together. Return path pieces 402 and pole pieces 404 are thus mechanically interlocked by mating detents 518 and held together by friction. Pole pieces 404 can also be welded to return path pieces 402 to further strengthen the attachment of pole pieces 404 to return path pieces 402. Alternatively, pole pieces 404 and return path pieces 402 could just be welded together.

Fig. 5C shows a variation of the mating features 424, 426 of Figs. 5A and 5B which is almost identical to the example shown in Figs. 5A and 5B, and only the differences will be discussed. Elements of Fig. 5C common with the elements of Figs. 5A and 5B are identified with the same reference numbers. The difference is that the mating detent 518 is moved distally outwardly along projection 500. This increases the "critical length" designated by reference numeral 520 compared with the length of the same segment in the embodiment shown in Figs. 5A and 5B. This critical length is the length of the segment of return path piece 402 and pole piece 404 through which the majority of the magnetic flux is carried. Maximizing this critical length benefits motor performance.

Illustratively, when return path pieces 402 are mated with pole pieces 404, they are brought together radially shown by arrow 440 in Fig. 4B, as opposed to axially. The return path piece 402 radially compresses respective sides of the field coils 406 mounted on pole pieces 404. This eliminates the return path piece 402 sliding axially across the field coils 406 and the possible damage to the insulation surrounding the field coils 406 due to the return path piece 402 sliding across them. Also, the tolerances, particularly of the field coils 406, can be somewhat looser when the return path pieces 402 and pole pieces 404 are mated by bringing them together radially as opposed to axially.

Making the return path pieces 402 separately from the pole pieces 404 also provides the advantage that not only can different materials, such as different magnetic grades of steel, be used to make them, but different construction techniques can be used. For example, the pole pieces 404 could be made of stacks of laminations as described above and the return path pieces made of solid steel. The pole pieces 404 would then include deformable portions that would be deformed against corresponding portions of return path pieces 402 to fasten the return path pieces 402 and pole pieces 404 together.

While stators 300 and 400 (Figs. 3 and 4) have been described in the context of having two poles with two return path pieces and two pole pieces, it should be understood that other configurations can be used that are within the scope of the invention. For example, only one return path piece could be used, which would illustratively be a cylindrical piece, with the two pole pieces being affixed to an inner side of the return path piece on opposite sides thereof. Each return path piece could be made of multiple pieces that are joined together, such as by welding or by forming mating features therein that snap together. The stator core pieces could also be held together by being inserted in a stator housing. The stators could also have more than two poles, such as four, six, eight or other multiples of two. In this regard, at least one pole piece would be provided for each pole and they would be spaced equidistantly around the stator. Each pole piece could be made of multiple pieces that are joined together.

Fig. 6A shows an illustrative example of a mould 600 that can be used to mould the encapsulation material, such as encapsulation material 309 (Fig. 3) that forms the encapsulation, particularly when an elastomeric encapsulation material such as liquid silicone rubber is used. Mould 600 has a core plate 602 having a plateau 604 from which locating posts 606 extend. On either side of plateau 604, core plate 602 has raised pads 608 and holes 610. Raised pads 608 are illustratively oval shaped and extend the majority of the way between plateau 604 and edges 612 of core plate 602. Mould 600 also has a cavity plate, not shown, that mates with core plate 602 when mould 600 is closed. The cavity plate may also have raised pads 608 and holes 610.

Raised pads 608 maintain coil 614 in centred spaced relation to a surface 620 of core plate 602 facilitating the flow of the encapsulating material 309 around the radial inner side 622 of coil 614. Holes 610 result in compression tabs or projections 624 being formed in encapsulation 313 on the radial inner side 622 of field coil 304 and, if provided in the cavity plate of mould 600, on the radial outer side 628 of field coil 304. (For continuity, reference number 622 is used to identify the radial inner side of coil 614 and of field coil 304). Raised pads 608 form recesses 626 in the encapsulation 313 on radial inner side 622 of field coil 304 and, if provided in the cavity plate of mould 600, on the radial outer side 628 of field coil 304. In addition to providing spacing between coil 614 and core plate 602, and the cavity plate of the mould 600 if provided on the cavity plate, raised pads 608 can also be used to thin out the walls of the encapsulation 313 that encapsulates coil 614 of field coil 304. Compression tabs 624 provided added areas of compression between field coil 304 and the pole pieces 308 (compression tabs 624 on the radial inner side 622 of field coil 304) and between the field coil 304 and the return path pieces 310 (compression tabs 624 on the radial outer side 628 of field coil 304) when field coil 304 is assembled into stator 300 (Fig. 3). Compression tabs 624 are dimensioned so that they are small compared to the overall area of field coil 304 so that they provided added retention without significantly increasing the assembly interference forces when field coil 304 is assembled with stator core pieces 306 (Fig. 3) to form stator 300 (Fig. 3).

With reference to Figs. 6A - C, the moulding of a field coil, such as field coil 304 (Figs. 3 and 6C), is described. The magnet wires 303 are wound in a coil 614 (Fig. 6B) having a predetermined shape, which is illustratively a section of a cylinder with a central open rectangular section 616 (Fig. 6B), which is also the final shape of the field coil 304 as can be seen from Fig. 6C. Coil 614 is placed in mould 600 so that plateau 604 extends through central open rectangular section 616. Central open rectangular 616 of coil 614 is placed around locating posts 606 when coil 614 is first placed in mould 600 which assist in properly locating coil 614 on core plate 602 as coil 614 is being placed in mould 600. Lead wires 302 are placed in slots 618 in core plate 602, only one of which is shown in Fig. 6A. The cavity plate of mould 600 is closed over core plate 602 and the encapsulation material 309 (Fig. 3) injected into mould 600, encapsulating coil 614 to form field coil 304 with magnet wires 303 encapsulated in encapsulation 313 made of encapsulation material 309.

Coil 614 of field coil 304 can be insulated by processes other than encapsulation, such as applying a resin coating to them by using the trickle resin process, applying an epoxy coat to them by dipping the formed coil 614 in a tank of epoxy, a powder coat process where heated coil windings cure powdered epoxy on the coil wires, applying an electrically insulating foam to them, or winding insulating tape, such as electrical insulating tape or epoxy tape, around them. In one type of powder coat process, heated coils are placed in a fluidized bed of epoxy. When the coils are insulated by coating, the coating can be applied to the coils before they are assembled in the stator or after. It should also be understood that the coils may be encapsulated or coated to improve abrasion protection and tracking resistance and the coils further insulated to provide insulation between the coils and the stator core pieces, such as with insulated slot liners or winding insulating tape around the encapsulated or coated coils.

Fig. 7 shows a cross section of stator 400 (Fig. 4C) in which the field coils 700 are insulated with a layer of insulating material 702 such as insulating paper, electrical insulating tape, epoxy tape, or electrical insulating foam. Insulating material 702 is wrapped around the coils of field coils 700 in the area abutting the field laminations, such as return path pieces 402 and pole pieces 404.

Such electrical insulating material, other than electrical insulating foam, is not compliant, so clearances must be left between the insulating material 702 and the field laminations, such as return and pole pieces 402, 404. These clearances result in a degree of looseness of field coils 700 in stator 400. To enhance product life and durability, these clearances need to be eliminated, or at least minimized. To do so, a compliant material 708 (Fig. 7B) is placed between the return path pieces 402 and the field coils 700. Compliant material 708 may illustratively be a foam having a suitable temperature rating. Compliant material 708 may also have adhesive on one or both sides to facilitate retaining it in place during assembly of stator 400 and improve retention of field coils 700 relative to return path pieces 402.

If foam is used as electrically insulating material 702 or compliant material 708, it may illustratively be thermally conductive to enhance heat transfer. In this regard, it may contain fillers such as ceramics to increase thermal conductively. Other types of fillers can be used, such as carbon which is cheaper than ceramic, if suitable for the electrical design of the product.

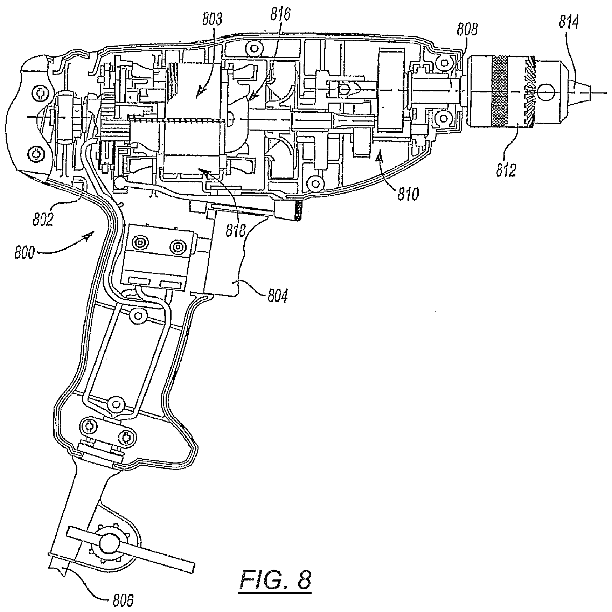

Referring now to Fig. 8, a power tool 800 is shown. Power tool 800 is illustratively a hand-held power tool and is illustrated as a drill, however, any type of power tool may be used in accordance with the present invention. The power tool 800 includes a housing 802 which surrounds a motor 803. An activation member 804 is coupled with the motor and a power source 806, illustratively AC. The motor 803 is coupled with an output 808 via a drivetrain 810. Output 808 includes a chuck 812 having jaws 814 to retain a tool such as a drill bit (not shown). The motor 803 includes an armature 816 and a stator 818 made in accordance with this invention, such as stator 300 or 400 (Figs. 3 and 4).

As discussed above with reference to Fig. 8, a motor, such as motor 803, having a stator 818 made as described above, such as with reference to Figs. 2, 3, 4 and 22 (hereafter referred to as a "multi-piece stator") can advantageously be used in power tools, such as power tool 800. Motor 803 illustratively has an armature having an OD that is at least .625 times the OD of the stator and may also have field windings that extend beyond the pole tips of the pole pieces, as described above. The field windings may also be wound with larger gauge wire than a comparably sized prior art motor. Such a motor provides higher power compared to a prior art motor for a given maximum no-load speed and motor volume. Alternatively it provides the same power at a lower maximum no-load speed and/or lower motor volume compared to a prior art motor. Thus, a hand-held power tool in accordance with aspects of the invention having a motor using the multi-piece stator can have higher power with the same motor volume and weight as the prior art power tool; have the same power but weigh less and have a smaller motor volume (allowing the power tool to be smaller); or have the same power and motor volume but run at a lower speed. Running at a lower speed can improve reliability and reduce overall vibration, particularly in those power tools having mechanical clutches and gearing. Motor 803 may preferably be a universal series motor and can be powered by AC or DC.

Motor volume, as used herein, is determined by frame size and stack length. Thus, power tool having a motor in accordance with the aspects of the invention just described can a motor having the same power as a prior art motor can have a smaller frame size motor and/or a motor having a shorter stack length. Alternatively, it can have a motor with the same frame size and stack length as a prior art motor but provide higher power. It can also have a motor that has a smaller volume (frame size and/or stack length) yet provide higher power than the prior art motor.

In hand-held power tools that are drills or hammer drills, important ergonomic criteria include motor power, volume (dictated primarily by the length of the stack of the motor's stator) and weight. With reference to power tool 800 shown in Fig. 8, a drill or hammer drill having motor 803 can have a given frame size motor (OD of the stator) with a shorter stack and have the same or even somewhat higher power compared a drill or hammer drill having the same frame size prior art motor. In this regard, motor 803 has a multi-piece stator of the type described above and an armature having an OD that is at least .625 the OD of the stator. It may also have field windings that extend beyond the tips of the pole pieces. The field windings may also be wound with larger gauge wire than a comparably sized prior art motor. Motor 803 may be a universal series motor.

In an example, the stack length of a 59mm OD frame size motor can be reduced approximately 12.5% from 40 mm to 35mm while maintaining the same frame size and speed. In this embodiment, motor 803 having a 59 mm OD frame size, a stack length of 35mm and wound to run at a no-load speed of 31,000 rpm has a maximum watts out of about 700 watts whereas the prior art motor has a stack length of 40 mm to provide 700 maximum watts out. In an embodiment, power tool 800 as a drill or hammer/drill thus has its housing 802 surrounding motor 803 shortened by a comparable amount, that is, 5 mm. In an embodiment, such a drill is a ½" variable speed reversing drill. Also, a motor 803 having a given frame size, stack length and speed can have higher output power, 30% and even up to 50%, compared to a comparable size prior art motor running at the same speed. For example, motor 813 having a 59mm OD frame size, a 40 mm stack length, and wound to run at a no-load speed of 31,000 rpm has about 800 maximum watts out compared to 700 maximum watts out of a comparably sized prior art motor.

As will be understood by a person of ordinary skill in the art, examples described herein (the previous examples being outside of the scope of the claims) may be applied to any motor used in any type of power tool, including, but not limited to, Hand-held router, reciprocating saw, power screw gun, random orbital sander, grinder, circular saw, mitre saw, chop saw, impact wrench, etc.

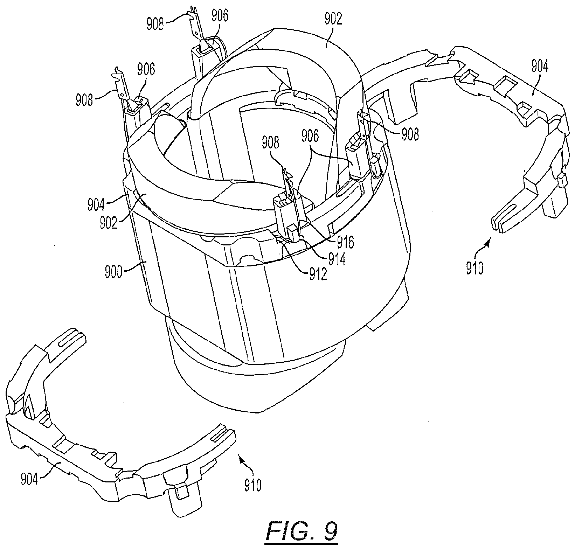

An aspect of the invention within the scope of the claims will be discussed herein with reference to Figs. 9 - 12.

In conventional motor stator designs, as discussed with reference to Fig. 1, an end ring 112 is attached to one or both the ends of the lamination stack 102 prior to the field coils 114 being wound. Field coils 114 are then wound by winding the magnet wires 104 in the slots 110. In the embodiments of the invention described herein with reference to Figs. 3-4C, however, field coils (304 and 406) are disposed on the pole pieces (308 and 404) before the pole pieces (308 and 404) are mated with the return path pieces (310 and 402). For this reason, it is no possible to place a conventional end ring to the ends of a multi-piece stator lamination stack.

Fig. 9 depicts a stator assembly according to an embodiment of the invention. In this embodiment, the stator assembly includes a stator lamination stack 900 assembled in accordance to the aforementioned teachings of this disclosure. Specifically, the lamination stack 900 may be a four-piece stator including pole pieces mated to return path pieces, although a two piece stator including two pole pieces mated together may also be utilized. The stator assembly may also include field coils 902 wound in a predetermined shape as previously described. Furthermore, one or two end rings 904 are disposed at one or both ends of the lamination stack 900.

According to an embodiment, the end rings 904 each include two halves mated together via mating features 910. Mating features 910 shown in Fig. 9 illustratively include a projecting snap on one end ring half and a corresponding receptacle on the other end ring half, although any other male/female mating or locking mechanism may be employed.

In an embodiment, at least one of the end rings includes posts 906 utilized for mounting a brush card as will be explained further below. In an embodiment, each post 906 is utilized to accommodate a conductive terminal 908 for connecting end wires 916 of the field coil 902 to the brushes on the brush card. In an embodiment, the end ring 904 further includes wire routing features including a routing slot 912 and a routing projection 914. The field coil end wires 916 are routed from the field coil 902, through the routing slot 912, and around the routing projection 914, to the conductive terminal 908. Since each field coil 902 includes two end wires, a total of four posts 906 and four terminals 908 are provided, according to an embodiment.

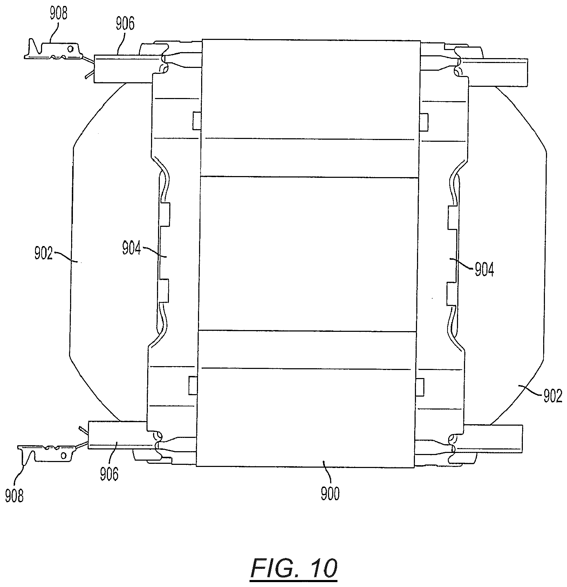

Fig. 10 illustrates a cross-sectional view of the stator assembly of Fig. 9, according to an embodiment. As shown in Figs. 9 and 10, each end ring half 904 is fully encapsulated between the field coil 902 and the lamination stack 900. Specifically, ends of the field coil 902 extend beyond both pole tips of the lamination stack 900 pole pieces and fold away from the centre of the stator assembly to create a gap between the field coil 902 and the pole tips. The end ring halves 904 fit within this gap such that, once the end rings halves 904 are mated together, they are securely mounted on the ends of the lamination stack 900.

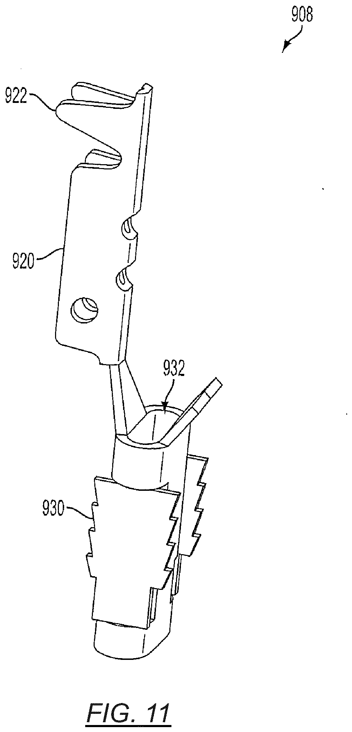

Fig. 11 depicts an exemplary conductive terminal 908, according to an embodiment. The conductive terminal 908 shown herein includes a wire receiving portion 920 including a groove for receiving the field coil end wire and a pair of fangs 922 arranged at the end of the groove to press against and hold the wire. The terminal 908 also includes a post attachment portion 930 having ledges that keep it inside the corresponding post 906 and a pin receiving portion 932 as described below.

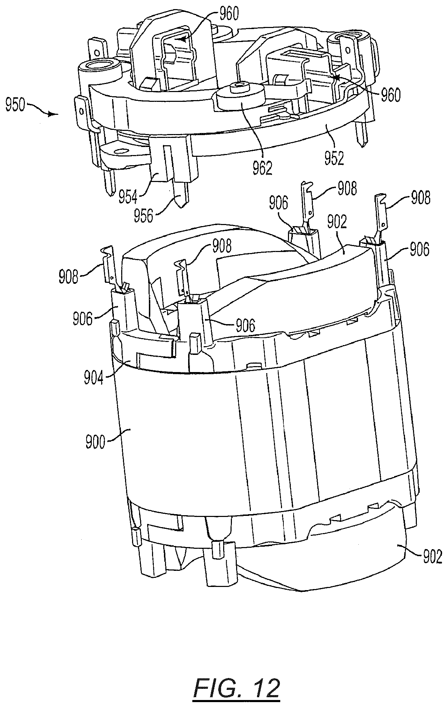

Fig. 12 depicts an exemplary brush card 950 mounted on the stator assembly of Fig. 9, according to an embodiment. As shown in this figure, the brush card 950 includes a brush board 952 having four posts 954 corresponding to posts 906 of the stator assembly. Each post 954 includes a conductive pin 956 which is inserted into the pin receiving portion 932 of the conductive terminal 908. The pins 956 are electrically connected to the brush holders 960 and the brushes (not shown) disposed therein. In this manner, the end wires 916 are electrically coupled to the brushes.

**Claims**

1. A power tool, comprising:

    a housing; and
    an electric motor disposed in the housing, the motor including a stator having a lamination stack (900) having separately-formed pole pieces and field coils (902) disposed on the pole pieces; an armature disposed in the stator; and an end ring (904) disposed at an end of the lamination stack (900), the end ring including at least two ring pieces (904) located around a portion of the field coils (902) extending beyond pole tips of the pole pieces; wherein the at least two ring pieces (904) comprise two ring halves;
    **characterised in that** the at least two ring pieces (904) are mated together around the portion of the field coils (902);
    wherein the at least two ring pieces (904) include mating features (910) for connecting the at least two ring pieces (904) together.

2. The power tool of claim 1, wherein the lamination stack (900) further includes return path pieces disposed between the pole pieces.

3. The power tool of claim 1, further comprising a brush card (950) accommodating at least two bushes, the brush card (950) being mounted on the end ring (904).

4. The power tool of claim 3, wherein the at least two ring pieces (904) each include at least one tower on which the brush card (950) is mounted.

5. The power tool of claim 4, wherein the at least one tower includes a conductive terminal (908).

6. The power tool of claim 5, wherein the conductive terminal (908) includes a wire receiving portion (920) arranged to receive conductive wires coupled to field coils (902) and a pin receiving portion (932) arranged to receive a conductive pin (956) arranged opposite a mounting surface of the brush card (950).

7. The power tool of claim 1, wherein the portion of the field coils (902) extending beyond pole tips of the pole pieces folds over the end ring (904) to securely hold the end ring (904) on the end of the lamination stack (900).

**Patentansprüche**

1. Elektrowerkzeug, umfassend:

    ein Gehäuse; und
    einen elektrischen Motor, der im Gehäuse angeordnet ist, wobei der Motor einen Stator einschließt, der ein Blechpaket (900) mit getrennt geformten Polstücken und Feldspulen (902), die auf den Polstücken angeordnet sind, aufweist; einen Anker, der im Stator angeordnet ist; und einen Endring (904), der an einem Ende des Blechpakets (900) angeordnet ist, wobei der Endring mindestens zwei Ringstücke (904) einschließt, die um einen Abschnitt der Feldspulen (902) herum gelegen, der sich jenseits von Polspitzen des Polstücke erstreckt; wobei die mindestens zwei Ringstücke (904) zwei Ringhälften umfassen;
    **dadurch gekennzeichnet, dass** die mindestens zwei Ringstücke (904) um den Abschnitt der Feldspulen (902) herum aneinander angepasst sind;
    wobei die mindestens zwei Ringstücke (904) aneinander angepasste Merkmale (910) zum Verbinden der mindestens zwei Ringstücke (904) miteinander einschließen.

2. Elektrowerkzeug nach Anspruch 1, wobei das Blechpaket (900) Rückleitungsstücke einschließt, die zwischen den Polstücken angeordnet sind.

**3.** Elektrowerkzeug nach Anspruch 1, weiter umfassend eine Bürstenkarte (950), die mindestens zwei Bürsten aufnimmt, wobei die Bürstenkarte (950) auf dem Endring (904) befestigt ist.

**4.** Elektrowerkzeug nach Anspruch 3, wobei die mindestens zwei Ringstücke (904) jeweils mindestens einen Turm einschließen, auf dem die Bürstenkarte (950) befestigt ist.

**5.** Elektrowerkzeug nach Anspruch 4, wobei der mindestens eine Turm einen leitenden Anschluss (908) einschließt.

**6.** Elektrowerkzeug nach Anspruch 5, wobei der leitende Anschluss (908) einen Drahtaufnahmeabschnitt (920) einschließt, der eingerichtet ist, um leitende Drähte, die mit Feldspulen (902) gekoppelt sind, aufzunehmen, und einen Stiftaufnahmeabschnitt (932), der eingerichtet ist, um einen leitenden Stift (956), der gegenüber einer Befestigungsfläche der Bürstenkarte (950) eingerichtet ist, aufzunehmen.

**7.** Elektrowerkzeug nach Anspruch 1, wobei der Abschnitt der Feldspulen (902), der sich jenseits von Polspitzen der Polstücke erstreckt, sich über dem Endring (904) faltet, um den Endring (904) sicher an dem Ende des Blechpakets (900) zu halten.

**Revendications**

**1.** Outil électrique, comprenant :

un boîtier ; et
un moteur électrique disposé dans le boîtier, le moteur incluant un stator présentant un empilement de tôles (900) présentant des pièces de pôles formées séparément et des bobines de champ (902) disposées sur les pièces de pôles ; un induit disposé dans le stator ; et un anneau d'extrémité (904) disposé au niveau d'une extrémité de l'empilement de tôles (900), l'anneau d'extrémité incluant au moins deux pièces annulaires (904) situées autour d'une partie des bobines de champ (902) s'étendant au-delà des pointes de pôles des pièces de pôles ;
dans lequel les au moins deux pièces annulaires (904) comprennent deux moitiés d'anneau ;
**caractérisé en ce que** les au moins deux pièces annulaires (904) sont accouplées ensemble autour de la partie des bobines de champ (902) ;
dans lequel les au moins deux pièces annulaires (904) incluent des caractéristiques d'accouplement (910) pour connecter les au moins deux pièces annulaires (904) ensemble.

**2.** Outil électrique selon la revendication 1, dans lequel l'empilement de tôles (900) inclut en outre des pièces de chemin de retour disposées entre les pièces de pôles.

**3.** Outil électrique selon la revendication 1, comprenant en outre une carte à brosses (950) recevant au moins deux brosses, la carte à brosses (950) étant montée sur l'anneau d'extrémité (904).

**4.** Outil électrique selon la revendication 3, dans lequel les au moins deux pièces annulaires (904) incluent chacune au moins une tour sur laquelle la carte à brosses (950) est montée.

**5.** Outil électrique selon la revendication 4, dans lequel la au moins une tour inclut une borne conductrice (908).

**6.** Outil électrique selon la revendication 5, dans lequel la borne conductrice (908) inclut une partie de réception de fil (920) agencée pour recevoir des fils conducteurs couplés à des bobines de champ (902) et une partie de réception de broche (932) agencée pour recevoir une broche conductrice (956) agencée en face d'une surface de montage de la carte à brosses (950).

**7.** Outil électrique selon la revendication 1, dans lequel la partie des bobines de champ (902) s'étendant au-delà des pointes de pôle des pièces de pôle se plie sur l'anneau d'extrémité (904) pour maintenir solidement l'anneau d'extrémité (904) sur l'extrémité de l'empilement de tôles (900).

*FIG. 1*
*PRIOR ART*

*FIG. 2*

_FIG. 3_

_FIG. 3A_

*FIG. 3B*

*FIG. 4A*

*FIG. 4B*

*FIG. 4C*

_FIG. 5A_

_FIG. 5B_

_FIG. 5C_

*FIG. 5D*

*FIG. 5E*

*FIG. 5F*

*FIG. 6A*

*FIG. 6B*

*FIG. 6C*

_FIG. 7A_

_FIG. 7B_

_FIG. 8_

*FIG. 9*

_FIG. 10_

_FIG. 11_

*FIG. 12*

**EP 2 698 902 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6034461 A
- GB 2430085 A